# EUROPÄISCHE PATENTANMELDUNG

(11) **EP 3 657 571 A1**
(43) Veröffentlichungstag der Anmeldung: **27.05.2020**
(21) Anmeldenummer: 18208347.7
(22) Anmeldetag: 26.11.2018
(51) Int. Cl.: H01M 2/20, H01M 10/42, H01M 2/30, H01M 10/48, H02J 7/00

(54) **BATTERIEMODUL**

(71) Anmelder: Aptiv Technologies Limited, St. Michael (BB)
(72) Erfinder: WOESTE, Guido, 58332 Schwelm (DE); BAEUMER, Peter, 44879 Bochum (DE)
(74) Vertreter: Manitz Finsterwald Patent- und Rechtsanwaltspartnerschaft mbB

(57) **Zusammenfassung**

Ein Batteriemodul (10) für Hochvolt-Batterie-Packs vorzugsweise für den Einsatz in Fahrzeugen, umfassend eine Mehrzahl von Batteriezellen (100), umfassend jeweils ein an jeder der Batteriezellen (100) angebrachtes elektronisches Batteriezellenüberwachungsmodul (110), wobei die Batteriezellenüberwachungsmodule (110) durch einen, mindestens zwei elektrische Leitungen (140, 141) umfassenden, Balancingbus (130), zur Übertragung von Daten und elektrischem Strom, miteinander verbunden sind, wobei die elektronischen Batteriezellenüberwachungsmodule (110) mit einem Pluspol (102) und einem Minuspol (104) der Batteriezelle (100) elektrisch verbunden sind, wobei die elektronischen Batteriezellenüberwachungsmodule (110) einen ersten elektrische Schalter (112) und einen zweiten elektrischen Schalter (114) aufweisen, wobei die elektrischen Schalter (112, 114) dazu ausgebildet sind die Batteriezellen (100) elektrisch mit jeweils einer der zwei elektrische Leitungen (140, 141) des Balancingbuses (130) zu verbinden, wobei das Batteriemodul (10) ein Energiespeichermodul (170) zur Speicherung elektrischer Energie umfasst, wobei das Energiespeichermodul (170) elektrisch mit den zwei elektrischen Leitungen (140, 141) des Balancingbuses (130) verbunden ist um elektrische Energie darüber aufzunehmen oder abzugeben, wobei die elektronischen Batteriezellenüberwachungsmodule (110) und das Energiespeichermodul (170) durch den Balancingbus (130) miteinander verbunden, ein Zell-Balancing-System bilden.

## Beschreibung

Die Erfindung betrifft Ein Batteriemodul für Hochvolt-Batterie-Packs zur Verwendung in Fahrzeugen, sowie ein Verfahren zum Balancieren des Ladezustandes der einzelnen Batteriezellen untereinander auf ein identisches, vorgegebenes Niveau.

Unter anderem für die Elektromobilität, insbesondere im Automobilbereich, werden aktuell bevorzugt Lithium-basierte Akkuzellen als Basis für Batteriemodule und solche als Basis für Hochvolt-Batterie-Packs verwendet. Bekannt sind Akkumulator(AKKU)-Batterie-Module, die aus mehreren in Reihe geschalteten Einzelzellen oder parallel geschalteten Zellblöcken zusammengeschaltet werden. Solche Batterie-Module werden auch zu Hochvolt-Batterie-packs in Reihe und parallelgeschaltet. Bei der Reihenschaltung von Akkus besteht die Problematik, dass mit zunehmender Anzahl von Lade- und Entladezyklen die Akkukapazitäten, bzw. Ladezustände der Zellen auseinanderdriften und sich so, orientierend an der schwächsten Zelle, die Gesamtkapazität eines Packs kontinuierlich reduziert.

Zur Vermeidung eines solchen Verhalten ist es bereits Stand der Technik, die Ladung zwischen den Zellebenen auszubalancieren. Dies geschieht üblicherweise passiv beim Laden durch elektronisch kontrolliertes Zuschalten von Widerständen zu den Zellen, die bereits ein hohes Niveau an Ladung erreicht haben, um so den Strom zum Laden der anderen Zellen, an diesen "volleren Zelle" vorbeizuführen. Des Weiteren wird das so genannte Aktiv-Balancing eingesetzt, um die beim Passiv-Verfahren entstehenden elektrischen Verluste zu reduzieren. Dabei werden Ladungsportionen elektronisch von höher geladenen Zellen abgenommen und an niedriger geladene Zellen wieder abgegeben. Dies wird üblicherweise durch eine zentrale, gemeinsame Elektronikeinheit realisiert.

Zentrale Elektroniken überwachen und balancieren einen festen Zellenverbund. Dabei werden Energieportionen von Einzelzellen entnommen, über Spannungs-Wandler zwischengespeichert und danach an eine andere Einzelzelle wieder abgegeben. Hierbei ist eine aufwändige Verdrahtung und Elektronik notwendig, welche die Spannungsabgriffe und Temperatursensorsignale zentral auf der Elektronik zusammenführt. Nach einer Demontage in Einzelzellen, sofern möglich, sind alle Daten zu den einzelnen Zellen nicht mehr verfügbar. Die Zellen müssen dann einzeln aufwendig charakterisiert werden, damit sie, als Gleichwertige identifiziert, neu zusammengesetzt werden können.

Es besteht in der Technik der Bedarf nach einem Batteriemodul mit einem Batteriezellenmanagementsystem, dass kosteneffizient und energieeffizient ein Batteriemodul balancieren kann und die Zellengeschichte, jeder einzelnen Batteriezelle, lückenlosen aufzeichnet und speichert.
Des Weiteren besteht der Bedarf über die Modulgrenzen hinaus Zellen oder Module miteinander auszubalancieren.

Die Aufgabe der Erfindung ist es, ein Batteriemodul bereitzustellen, dass die oben genannten Nachteile beseitigt und ein Batteriemodul oder auch darüber hinaus mehrere Batteriemodule mit einem Batteriezellenmanagementsystem, dass kosteneffizient und energieeffizient ein oder mehrere Batteriemodule balancieren kann und die Zellengeschichte jeder einzelnen Batteriezelle lückenlos aufzeichnet und speichert.

Die Aufgabe wird durch den Gegenstand des Anspruchs 1 sowie durch das Verfahren nach Anspruch 15 gelöst.

Insbesondere geschieht dies durch ein Batteriemodul für Hochvolt-Batterie-Packs vorzugsweise für den Einsatz in Fahrzeugen. Das Batteriemodul umfasst eine Mehrzahl von Batteriezellen. An jeder der Batteriezellen ist ein elektronisches Batteriezellenüberwachungsmodul angebracht. Die Batteriezellenüberwachungsmodule sind durch einen, mindestens zwei elektrische Leitungen umfassenden, Balancingbus, zur Übertragung von Daten und elektrischem Strom, miteinander verbunden. Die elektronischen Batteriezellenüberwachungsmodule sind jeweils mit einem Pluspol und einem Minuspol einer Batteriezelle elektrisch verbunden. Die elektronischen Batteriezellenüberwachungsmodule weisen einen ersten elektrischen Schalter und einen zweiten elektrischen Schalter auf. Die elektrischen Schalter sind dazu ausgebildet die Batteriezellen elektrisch mit jeweils einer der zwei elektrische Leitungen des Balancingbuses zu verbinden. Das Batteriemodul umfasst ein Energiespeichermodul zur Speicherung elektrischer Energie. Das Energiespeichermodul ist elektrisch mit den zwei elektrischen Leitungen des Balancingbuses verbunden, um elektrische Energie darüber aufzunehmen oder abzugeben. Die elektronischen Batteriezellenüberwachungsmodule und das Energiespeichermodul sind durch den Balancingbus miteinander verbunden und bilden ein Zell-Balancing-System.

Die elektronischen Batteriezellenüberwachungsmodule und die verwendeten Batteriezellen sind im Wesentlichen von gleicher Bauart. Die in den Batteriezellenüberwachungsmodulen verwendeten elektronischen Bauteile sollten in allen Batteriezellenüberwachungsmodule identisch oder technisch vergleichbar sein. Dadurch ist ein reibungsloser Ablauf der Steuerungsprogramme gewährleistet, die die Batteriezellenüberwachungsmodule steuern. Zusätzlich lassen sie sich durch die Vereinheitlichung in großer Stückzahl technisch hoch integrieren und kostengünstig herstellen. Die Steuerungsprogramme, die für Steuerung der Batteriezellenüberwachungsmodule verwendet werden, sind ebenfalls identisch. Die elektronischen Batteriezellenüberwachungsmodule, die jeweils fest mit einer Batteriezelle verbunden sind, erfassen kontinuierlich die Kennwerte der Batteriezelle. Die Kennwerte der Batteriezelle sind zumindest die elektrische Spannung zwischen den Batteriepolen, und die Temperatur der Batteriezelle. Die Batteriezellenüberwachungsmodule erfassen des Weiteren die elektrische Spannung zwischen den mindestens zwei elektrischen Leitungen des Balancingbusses und können dadurch den Ladungszustand des elektrischen Energiespeichermoduls beurteilen. Die elektronischen Batteriezellenüberwachungsmodule verfügen über die Fähigkeit über den Balancingbus miteinander zu kommunizieren, wobei ein Netzwerk nach dem bekannten Multi-Master-System verwendet werden kann. Die elektronischen Batteriezellenüberwachungsmodule kommunizieren miteinander und vergleichen die Spannungswerte ihrer eigenen Batteriezellen mit den Spannungswerten der anderen Batteriezellen. Nach Konsensbildung aller elektronischen Batteriezellenüberwachungsmodule verbindet ein Überwachungsmodul seine Batteriezelle, die die höchste elektrische Spannung aufweist, gemeinsam mit mindestens einer benachbarten Batteriezelle mit den zwei elektrischen Leitungen des Balancingbus und leitet darüber elektrische Energie von den Batteriezellen in den elektrischen Energiespeicher und trennt sich danach wieder von den zwei elektrischen Leitungen des Balancing-Bus. Danach verbindet sich eine Batteriezelle, die eine zu niedrige elektrische Spannung aufweist mit den zwei elektrischen Leitungen, des Balancingbuses und leitet darüber elektrische Energie von dem elektrischen Energiespeicher in die Batteriezelle und trennt sich wieder von den zwei elektrischen Leitungen des Balancing-Bus. Dieser Vorgang setzt sich kontinuierlich fort. Das Energiespeichermodul kann einen Kondensator, eine elektrische Spule oder eine Kombination aus einem Kondensator und einer elektrischen Spule oder andere speicherfähige Bauteile umfassen um elektrische Energie zu speichern.

Über die Modulgrenzen hinaus kann der Balancingbus auch mit weiteren Bussen in anderen Modulen verbunden werden, um das Balancingsystem auf die Gesamtbatterieebene zu heben. Alternativ kann auch ein übergeordnet Balancingsystem nach dem gleiche Prinzip Ladung zwischen Modulen balancieren, indem statt der Einzelzellen die Module Ladungen abgeben und aufnehmen.

Das Verfahren zum Anpassen der Ladung der einzelnen Batteriezellen eines Batteriemoduls auf ein vorgegebenes Niveau umfasst die Schritte:
a) Bereitstellen eines Batteriemoduls für Hochvolt-Batterie-Packs vorzugsweise für den Einsatz in Fahrzeugen, umfassend jeweils eine Mehrzahl von Batteriezellen, umfassend jeweils ein an jeder der Batteriezellen angebrachtes elektronisches Batteriezellenüberwachungsmodul, wobei die Batteriezellenüberwachungsmodule durch einen, mindestens zwei elektrische Leitungen umfassenden, Balancingbus, zur Übertragung von Daten und elektrischem Strom, miteinander verbunden sind, wobei die elektronischen Batteriezellenüberwachungsmodule mit einem Pluspol und einem Minuspol der Batteriezelle elektrisch verbunden sind, wobei die elektronischen Batteriezellenüberwachungsmodule einen ersten elektrische Schalter und einen zweiten elektrischen Schalter aufweisen, wobei die elektrischen Schalter dazu ausgebildet sind, die Batteriezellen elektrisch mit jeweils einer der zwei elektrische Leitungen des Balancingbuses zu verbinden, wobei das Batteriemodul ein Energiespeichermodul zur Speicherung elektrischer Energie umfasst, wobei das Energiespeichermodul elektrisch mit den zwei elektrischen Leitungen des Balancingbuses verbunden ist, um elektrische Energie darüber aufzunehmen oder abzugeben, wobei die elektronischen Batteriezellenüberwachungsmodule und das Energiespeichermodul durch den Balancingbus miteinander verbunden, ein Zell-Balancing-System bilden.
b) Verbinden des Pluspols der Batteriezelle mit dem Minuspol der benachbarten Batteriezelle und verbinden des Minuspols der Batteriezelle mit dem Pluspol der anderen benachbarten Batteriezelle, so das eine Reihenschaltung aller Batteriezellen entsteht, wobei ein Pluspol und ein Minuspol der Reihenschaltung nicht miteinander verbunden sind, diese bilden jeweils den +/- - Pol des Batterie-Moduls;
c) Starten der Kommunikation aller angeschlossenen Batteriezellensteuermodul über den Balancingbuses;
c) Identifizieren aller Batteriezellenüberwachungsmodule;
d) Ermitteln der Anordnung der Batteriezellen im Batteriemodul;
e) Austauschen aller Ladezustände der Batteriezellen über den Balancingbus;
f) Kontrolle übernehmen, (zum Beispiel) durch das Batteriezellenüberwachungsmodul mit der höchsten übermittelten Ladespannung;
g) Aufschalten zweier in Reihe geschalteter Batteriezellen auf den Balancing-Bus, jeweils durch den Pluspol der einen Zelle und den Minuspol der anderen Zelle, wobei eine der Zellen, die Zelle mit der höchsten Zellspannung ist und die zweite in Reihe liegende Zelle mit der vergleichsweise höheren Zellspannung dieser beiden in Reihe liegenden benachbarten Zellen ist;
h) Laden des elektrischen Energiespeichers;
i)Trennen der Batteriezellen vom Balancingbus;
j) Aufschalten des Pluspols und des Minuspols der Batteriezellemit der niedrigsten Ladespannung auf den Balancingbus;
k) Laden der Batteriezelle mit der Energie des elektrischen Energiespeichers;
l) Trennen der Batteriezellen vom Balancingbus;
m) Mit Verfahrensschritt e) fortfahren.

Vorteilhafterweise sind die elektronischen Batteriezellenüberwachungsmodule als Multimastersysteme ausgelegt, damit die im Verbund befindlichen Batteriezellen, ohne externe Initialisierung, das aktive Balancing durchführen können.

Zyklisch übermittelt jedes Batteriezellenüberwachungsmodul seinen Ladezustand. Diese werden in jedem Batteriezellenüberwachungsmodul zwischengespeichert. Das Batteriezellenüberwachungsmodul, welches im Verbund den höchsten Ladezustand hat, könnte dann für die Steuerung des nächsten Balancingzyklus zuständig sein. Der Zyklus beinhaltet die Ermittlung einer der beiden benachbarten Batteriezellen mit dem höheren Ladezustand. Mittels Steuerkommando wird das kurzeiteige Aufschalten der beiden in Reihe befindlichen Batteriezellen auf den Balancingbus zur Ladungsabgabe an das Energiespeichermodul eingeleitet. Ein weiteres Steuerkommando wird dann das kurzzeitige Aufschalten der schwächsten Batteriezelle zur Ladungsentnahme aus dem Energiespeichermoduls einleiten. Das Batteriezellenüberwachungsmodul der schwächsten Batteriezelle übernimmt hierbei das Monitoring des Ladezyklus (Spannung, Strom) und das Trennen vom Balancingbus. Nach der nächsten Ladezustandsermittlung, wird dann der nächste Balancingzyklus wie oben beschrieben durchgeführt.

Vorteilhafte Ausbildungen der Erfindung sind den Unteransprüchen, der Beschreibung und der Zeichnung zu entnehmen.

Gemäß einer Ausführungsform kann jedes der elektronischen Batteriezellenüberwachungsmodule, unabhängig von den weiteren elektronischen Batteriezellenüberwachungsmodulen, den Pluspol der Batteriezelle mittels des ersten elektrische Schalters mit einer der elektrischen Leitung des Balancingbusses verbinden und den Minuspol der Batteriezelle mittels des zweiten elektrischen Schalters mit der anderen elektrischen Leitung des Balancingbusses verbinden. Jedes der elektronischen Batteriezellenüberwachungsmodule verfügt über elektrische Schalter die einzeln schaltbar sind. Die Ausführung der Schalter als Halbleiterbauelement macht es möglich hohe Schaltfrequenzen zu realisieren und gleichzeitig eine lange Lebenszeit zu garantieren.

Bevorzugt kann jedes der elektronischen Batteriezellenüberwachungsmodule, unabhängig von den weiteren elektronischen Batteriezellenüberwachungsmodulen, den Pluspol der Batteriezelle mittels des ersten elektrische Schalters mit einer der elektrischen Leitung des Balancingbusses verbinden und ein benachbartes Batteriezellenüberwachungsmodul kann den Minuspol der Batteriezelle mittels des zweiten elektrischen Schalters mit der anderen elektrischen Leitung des Balancingbusses verbinden, wobei sich dies, je nach Reihenfolge der Zellen, auch in umgekehrter Reihenfolge und Polarität vollziehen kann. Die benachbarten Batteriezellen sind jeweils mit dem verbleibenden Minuspol und Pluspol der jeweiligen Nachbar Batteriezelle in Reihenschaltung elektrisch miteinander verbunden, damit wird eine um den Faktor zwei höhere Gesamtspannung am Balancingbus erreicht. Durch die unabhängige Schaltmöglichkeit der elektrischen Schalter ist es möglich zum Beispiel den Pluspol einer Batteriezelle auf eine der zwei elektrischen Leitung aufzuschalten und den Minuspol der benachbarten Batteriezelle auf die zweite der zwei elektrischen Leitungen aufzuschalten. Durch die doppelte Spannung die nun zwischen den zwei elektrischen Leitungen anliegt, kann der elektrische Energiespeicher höher geladen werden, um dann für die spätere Entnahme vom Energiespeicher mehr Energie, bzw. ein höheres Ladungspotential zur Verfügung zu haben. Dies erübrigt zu dem die Verwendung von elektronischen DC/DC-Spannungswandlern. In Kombination mit kurzen Schaltzeiten können mit einer Ladung des elektrischen Energiespeichers auch mehrere Batteriezellen nacheinander geladen werden, ohne den elektrischen Energiespeicher dazwischen laden zu müssen.

Bevorzugt weist das Batteriezellenüberwachungsmodule mindestens einen elektrischen Datenanschluss auf, der kapazitiv mit einer der elektrischen Leitungen des Balancingbuses verbunden ist, wobei Steuersignale durch Modulation auf dieser elektrischen Leitung zu dem Datenanschluss übertragen werden. Durch das Aufmodulieren auf eine oder beide elektrischen Leitungen können zusätzliche Signalleitungen entfallen.

Bevorzugt weist das Batteriezellenüberwachungsmodule mindestens einen optischen Datenanschluss auf und der Balancingbuses weist eine optische Leitung auf, wobei der Datenanschluss optisch mit der optischen Leitung des Balancingbuses verbunden ist, wobei Steuersignale durch Modulation von Licht auf der entsprechenden optischen Leitung übertragen werden. In der Fahrzeugtechnik hat sich die Verwendung von optischen Leitungen in besonders stark elektromagnetisch kontaminierten Umgebungen bewährt, um Störungen bei der Datenübertragung zu vermeiden.

Nach einer weiteren Ausführungsform weist das Batteriezellenüberwachungsmodule mindestens einen elektrischen Datenanschluss auf der zweipolig ausgeführt ist. Der Balancingbus umfasst zwei elektrische Datenleitungen, die mit dem zweipoligen elektrischen Datenanschluss verbunden sind. Jeweils eine elektrische Datenleitung ist mit einem elektrischen Datenanschluss verbunden. Die Steuersignale werden durch Modulation auf den zwei elektrischen Datenleitungen übertragen. Je nach erforderlicher Datenübertragungsrate können auch zwei elektrische Drähte als Datenleitung verwendet werden. Vorzugsweise werden diese Drähte miteinander verdrillt, um Störungen zu minimieren. Wenn erforderlich kann das System auch per Funk kommunizieren. Wobei bekannte Techniken wie WLAN, Bluetooth oder NFC zum Tragen kommen können. Der Einsatz von Funktechnik zur Kommunikation würde den Hardware-Umfang auf die, für die Ladungsverschiebung notwendigen, zwei elektrischen Leitungen reduzieren.

Bevorzugt sind die elektronischen Batteriezellenüberwachungsmodule programmierbar und umfassen mindestens einen Mikroprozessorbaustein, der Speicher, Ein/Ausgabe Ports, Temperatur und Spannungsmessmittel aufweist, wobei die elektronischen Batteriezellenüberwachungsmodule eine grundlegende Kommunikationsfunktionalität zur Kommunikation mit den anderen Batteriezellenüberwachungsmodulen mittels des Balancingbuses aufweisen. In der Industrie werden Mikroprozessorbausteine mit den oben genannten Eigenschaften seit langem verwendet und sind preiswert zu erwerben. Viele dieser Mikroprozessorbausteine verfügen über eine implementierte Kommunikationsfunktionalität mit verschiedenen in der Industrie verwendeten Übertragungsprotokollen und Verfahren. Diese Kommunikationsfunktionalität reduziert den Entwicklungsaufwand bei der Programmierung. Des Weiteren verfügen solche Mikroprozessorbausteine überwiegend über eine Energiesparfunktionalität die den Stromverbrauch auf ein Minimum reduziert.

Bevorzugt weisen die elektronischen Batteriezellenüberwachungsmodule jeweils eine einzigartige Kennung, z.B. nachdem UUID-Standard, auf, wobei jeweils eine solche Kennung unlöschbar in den Batteriezellenüberwachungsmodulen implementiert ist und über den Balancingbus abgefragt werden kann. Diese einzigartige Kennung kann zum Beispiel in einem EPROM auf dem Batteriezellenüberwachungsmodul abgelegt sein.
Ein Universally Unique Identifier (UUID) ist ein Standard für Identifikationen, der in der Softwareentwicklung verwendet wird. Er wurde von der Open Software Foundation (OSF) als Teil des Distributed Computing Environment (DCE) standardisiert. Die Absicht hinter UUIDs ist, Informationen in verteilten Systemen ohne zentrale Koordination eindeutig kennzeichnen zu können. Ein UUID besteht aus einer 16-Byte-Zahl, die hexadezimal notiert und in fünf Gruppen unterteilt wird.

Bevorzugt speichern die elektronischen Batteriezellenüberwachungsmodule die Kenndaten der entsprechenden Batteriezelle aktualisiert über die Lebensdauer der Batteriezelle. Informationen über die Anzahl der Lade- und Entladezyklen und weitere Kenndaten der Batteriezelle werden kontinuierlich abgespeichert und können über den Balancingbus abgefragt werden. Zum Beispiel könnte ein Service Gerät an den Balancingbus oder direkt an ein elektronisches Batteriezellenüberwachungsmodul angeschlossen werden um diese Daten anzusehen oder herunterzuladen. Anhand dieser Daten ist es möglich eine Vorhersage über die weitere Verwendungsfähigkeit der Batteriezelle zu treffen und sie gegebenenfalls auszutauschen.

Bevorzugt ist das elektronische Batteriezellenüberwachungsmodul einteilig mit der Batteriezelle ausgebildet, wodurch ein autonomes Batterieelement entsteht. Das elektronische Batteriezellenüberwachungsmodul ist im Verhältnis zur Batteriezelle relativ klein und kann auf die Batteriezelle aufgeklebt werden. Denkbar ist auch eine Integration in das Gehäuse der Batteriezelle, was sich in einem erhöhten Schutz gegen Beschädigung oder Manipulation des elektronischen Batteriezellenüberwachungsmoduls niederschlägt.

Nach einer weiteren Ausführungsform kann die Batteriezelle des Batteriemoduls während des Betriebes als Energieversorgung, als auch in Zeiträumen in denen das Batteriemodul weder mit einer Energieversorgung noch mit einem Verbraucher verbunden ist, balanciert werden. Dadurch behält das Batteriemodul seine volle Funktionalität auch wenn es als Ersatzteil zwischengelagert ist. Eine Tiefentladung einer Batteriezelle wird weitgehend verhindert da alle Batteriezelle auf einem ähnlichen Spannung Niveau gehalten werden. Um eine Tiefentladung des gesamten Batteriemoduls zu verhindern kann eine Signalvorrichtung, die eine Tiefentladung signalisiert, an den Stromanschlüssen des Batteriemoduls vorgesehen werden, die signalisiert, dass die Gesamtspannung des Batteriemoduls zu niedrig wird.

Bevorzugt weist das Batteriemoduls eine Schnittstelle auf, die dazu ausgebildet ist das Batteriemodul mit einer Steuerung eines elektrisch angetriebenen Fahrzeugs zu verbinden. Elektrisch angetriebene Fahrzeuge weisen eine mächtige Steuerung auf, um alle nötigen Funktionen zu kontrollieren. Um die Steuerung kontinuierlich mit den Kenndaten der Batteriezellen zu versorgen, kann eine Schnittstelle zur der Steuerung vorgesehen werden. Die Schnittstelle kann eine vom Hersteller vorgegebene oder eine sonstige, in der Industrie bekannte und bewährte, Schnittstelle sein.

In gleicher Weise kann auch ein Balancing zwischen Modulen durchgeführt werden, die in Reihe zu einem Batteriepack zusammengeschaltet sind.
Die Module beinhalten Reihenschaltungen von Zellen, wie vorher beschrieben. Wie beim Zellenbalancing werden hier Ladungsportionen zwischen Modulen ausgetauscht.
Bevorzugt weist die Schnittstelle elektrische oder optische Kontakte auf, die dazu ausgebildet sind mit der Steuerung anderer Module, der des elektrisch angetriebenen Fahrzeugs oder der eines Lagersystems zu kommunizieren. Dadurch kann zumindest die Selbstentladung, insbesondere bei längeren Lagerzeiten, ausgeglichen werden. Durch das Anbinden des Balancingbuses an das Netzwerk des elektrisch angetriebenen Fahrzeugs wird das Batteriemodul vollständig in das elektrisch angetriebene Fahrzeug integriert, was zu einer erhöhten Ausfallsicherheit des Fahrzeugs führt, da Probleme bei der Energiespeicherung frühzeitig erkannt werden.
Nachfolgend wird die Erfindung anhand einer vorteilhaften Ausführungsform rein beispielhaft unter Bezugnahme auf den beigefügten Zeichnungen beschrieben. Es zeigen:
- Fig. 1: zeigt eine perspektivische Darstellung des Batteriemoduls.
- Fig. 2: zeigt eine schematische Darstellung des Batteriemoduls.
- Fig. 3: zeigt Details zur der kapazitiven Kopplung des Datenanschlusses in schematische Darstellung
- Fig. 4: zeigt Details zur optischen Kopplung des Datenanschlusses in schematische Darstellung
- Fig. 5: zeigt Details zur elektrischen Kopplung des Datenanschlusses in schematische Darstellung

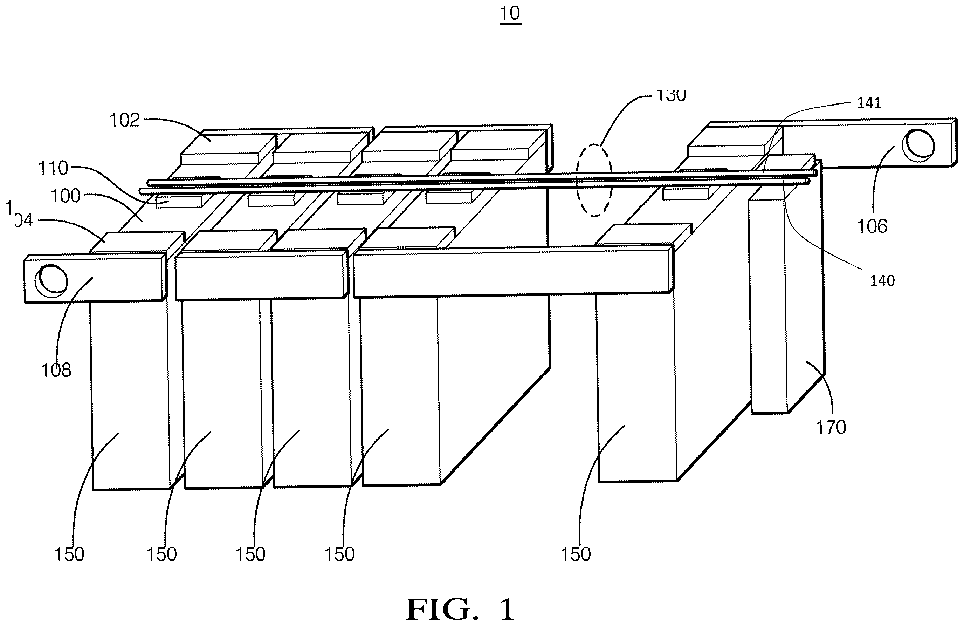

Figur 1 zeigt eine perspektivische Darstellung eines Batteriemoduls 10. Das Batteriemodul 10 umfasst eine Mehrzahl von Batteriezellen 100. An jeder der Batteriezellen 100 ist ein elektronisches Batteriezellenüberwachungsmodul 110 angebracht. Die Batteriezellenüberwachungsmodule 110 sind durch einen, mindestens zwei elektrische Leitungen 140, 141 umfassenden, Balancingbus 130, zur Übertragung von Daten und elektrischem Strom, miteinander verbunden. Die elektronischen Batteriezellenüberwachungsmodule 110 sind mit einem Pluspol 102 und einem Minuspol 104 der Batteriezelle 100 elektrisch verbunden. Das elektronische Batteriezellenüberwachungsmodul 110 ist einteilig mit der Batteriezelle 100 ausgebildet, wodurch ein autonomes Batterieelement 150 gebildet wird. Jede Batteriezelle 100 des Batteriemoduls 10 ist jeweils mit dem eigenen Pluspol 102 mit einem Minuspol 104 einer benachbarten Batteriezelle (100) elektrisch verbunden. Des Weiteren ist jede Batteriezelle 100 des Batteriemoduls 10 jeweils mit dem eigenen Minuspol 104 mit einem Pluspol 102 einer benachbarten Batteriezelle 100 elektrisch verbunden. So das eine Reihenschaltung aus Batteriezellen 100 entsteht. Eine Ausnahme besteht bei der ersten und letzten Batteriezelle 100, deren freier Pol mit einem Anschlusselement 106, 108 versehen ist, um das Batteriemodul 10 an ein elektrisches Gerät anschließbar zu machen.

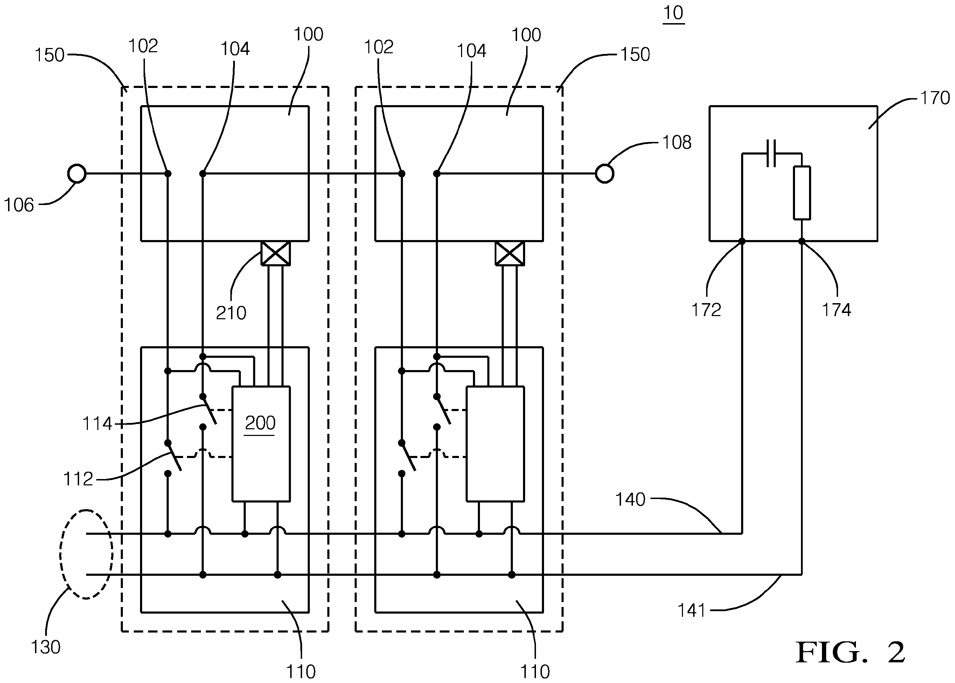

Figur 2 zeigt eine schematische Darstellung Batteriemoduls 10. Es sind beispielhaft nur zwei Batteriezellen dargestellt. Die elektronischen Batteriezellenüberwachungsmodule 110 weisen einen ersten elektrischen Schalter 112 und einen zweiten elektrischen Schalter 114 auf. Die elektrischen Schalter 112, 114 sind dazu ausgebildet die Batteriezellen 100 elektrisch mit jeweils einer der zwei elektrische Leitungen 140, 141 des Balancingbuses 130 zu verbinden. Das Batteriemodul 10 umfasst ein Energiespeichermodul 170 zur Speicherung elektrischer Energie. Das Energiespeichermodul 170 umfasst in der Darstellung beispielhaft eine Kombination aus Kondensator und Spule. Es könnt aber auch ein alternativer Speicher für elektrische Energie verwendet werden. Das Energiespeichermodul 170 ist elektrisch mit den zwei elektrischen Leitungen 140, 141 des Balancingbuses 130 verbunden, um elektrische Energie darüber aufzunehmen oder abzugeben. In der Darstellung ist das Energiespeichermodul 170 mit seinen Anschüssen 172, 174 mit den zwei elektrischen Leitungen 140, 141 verbunden. Die elektronischen Batteriezellenüberwachungsmodule 110 und das Energiespeichermodul 170 sind durch den Balancingbus 130 miteinander verbunden und bilden ein Zell-Balancing-System. Jedes der elektronischen Batteriezellenüberwachungsmodule 110 kann unabhängig von den weiteren elektronischen Batteriezellenüberwachungsmodulen 110, den Pluspol 102 der Batteriezelle 100 mittels des ersten elektrische Schalters 112 mit einer der elektrischen Leitungen 140, 141 des Balancingbusses 130 verbinden und den Minuspol 104 der Batteriezelle 100 mittels des zweiten elektrischen Schalters 114 mit der anderen elektrischen Leitung 141 des Balancingbusses 130 verbinden. Jedes der Batteriezellenüberwachungsmodule 110 ist programmierbar und weist mindestens einen Mikroprozessorbaustein 200 auf, der Speicher, Ein/Ausgabe Ports, Temperatur und Spannungsmessmittel umfasst. Das Temperaturmessmittel ist in dieser Darstellung als Temperatursensor 210 ausgeführt. Die elektronischen Batteriezellenüberwachungsmodule 110 weisen eine grundlegende Kommunikationsfunktionalität zur Kommunikation mit den anderen Batteriezellenüberwachungsmodulen 110 mittels des Balancingbuses 130 auf.

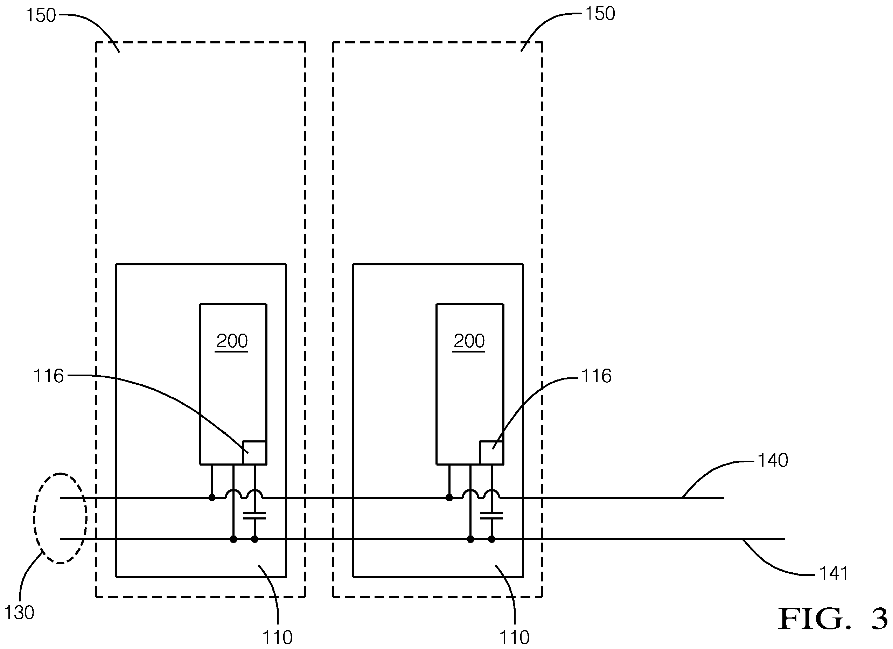

Figur 3 zeigt Details zur der kapazitiven Kopplung des Datenanschlusses in schematischer Darstellung. Das Batteriezellenüberwachungsmodul 110 weist mindestens einen elektrischen Datenanschluss 116 auf, der kapazitiv mit mindestens einer der elektrischen Leitungen 140, 141 des Balancingbuses 130 verbunden ist, wobei Steuersignale durch Modulation auf dieser elektrischen Leitung 140, 141 zu dem Datenanschluss 116 übertragen werden.

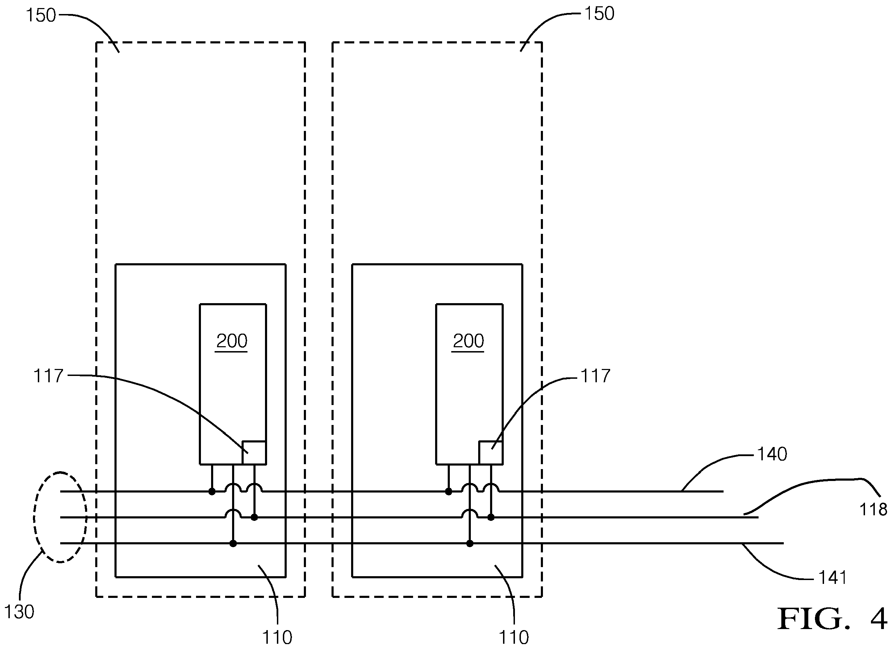

Figur 4 zeigt Details zur optischen Kopplung des Datenanschlusses in schematischer Darstellung. Das Batteriezellenüberwachungsmodul 110 weist mindestens einen optischen Datenanschluss 117 auf. Der Balancingbus 130 weist eine optische Leitung 118 auf, wobei der Datenanschluss 117 optisch mit der optischen Leitung 118 des Balancingbuses 130 verbunden ist. Die Steuersignale werden durch Modulation von Licht auf der optischen Leitung 118 übertragen.

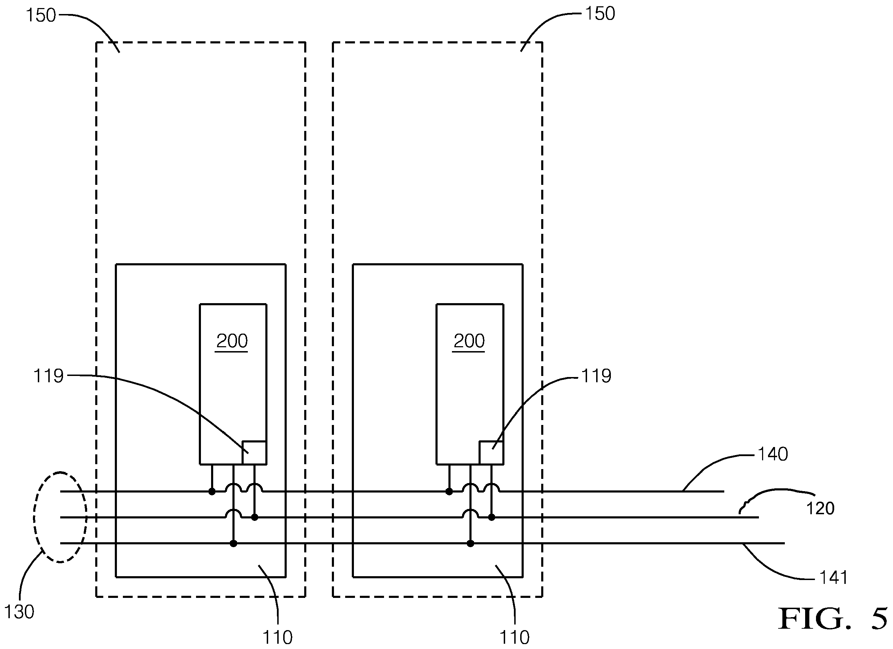

Figur 5 zeigt Details zur elektrischen Kopplung des Datenanschlusses in schematischer Darstellung. Das Batteriezellenüberwachungsmodul 110 weist mindestens einen elektrischen Datenanschluss 119 auf, der ein-
oder zweipolig ausgeführt ist. Der Balancingbus 130 umfasst eine oder zwei elektrische Datenleitungen 120, die mit dem ein- oder zweipoligen elektrischen Datenanschluss 119 elektrisch verbunden sind, wobei jeweils eine der elektrischen Datenleitungen 120 mit einem elektrischen Pol des Datenanschlusses 119 verbunden ist. Die Steuersignale werden durch Modulation auf den ein oder zwei elektrischen Datenleitungen 120 übertragen.

## Patentansprüche

1. Ein Batteriemodul (10) für Hochvolt-Batterie-Packs vorzugsweise für den Einsatz in Fahrzeugen, umfassend eine Mehrzahl von Batteriezellen (100), umfassend jeweils ein an jeder der Batteriezellen (100) angebrachtes elektronisches Batteriezellenüberwachungsmodul (110), wobei die Batteriezellenüberwachungsmodule (110) durch einen, mindestens zwei elektrische Leitungen (140, 141) umfassenden, Balancingbus (130), zur Übertragung von Daten und elektrischem Strom, miteinander verbunden sind, wobei die elektronischen Batteriezellenüberwachungsmodule (110) mit einem Pluspol (102) und einem Minuspol (104) der Batteriezelle (100) elektrisch verbunden sind, wobei die elektronischen Batteriezellenüberwachungsmodule (110) einen ersten elektrische Schalter (112) und einen zweiten elektrischen Schalter (114) aufweisen, wobei die elektrischen Schalter (112, 114) dazu ausgebildet sind die Batteriezellen (100) elektrisch mit jeweils einer der zwei elektrische Leitungen (140, 141) des Balancingbuses (130) zu verbinden, wobei das Batteriemodul (10) ein Energiespeichermodul (170) zur Speicherung elektrischer Energie umfasst, wobei das Energiespeichermodul (170) elektrisch mit den zwei elektrischen Leitungen (140, 141) des Balancingbuses (130) verbunden ist, um elektrische Energie darüber aufzunehmen oder abzugeben, wobei die elektronischen Batteriezellenüberwachungsmodule (110) und das Energiespeichermodul (170) durch den Balancingbus (130) miteinander verbunden, ein Zell-Balancing-System bilden.

2. Batteriemodul (10) nach Anspruch 1, wobei jedes der elektronischen Batteriezellenüberwachungsmodule (110) unabhängig von den weiteren elektronischen Batteriezellenüberwachungsmodulen (110), den Pluspol (102) der Batteriezelle (100) mittels des ersten elektrische Schalters (112) mit einer der (140) elektrischen Leitung des Balancingbusses (130) verbinden kann und den Minuspol (104) der Batteriezelle (100) mittels des zweiten elektrischen Schalters (114) mit der anderen elektrischen Leitung (141) des Balancingbusses (130) verbinden kann.

3. Batteriemodul (10) nach Anspruch 1 und 2, wobei jedes der elektronischen Batteriezellenüberwachungsmodule (110) unabhängig von den weiteren elektronischen Batteriezellenüberwachungsmodulen (110), den Pluspol (102) der Batteriezelle (100) mittels des ersten elektrische Schalters (112) mit einer der (140) elektrischen Leitungen des Balancingbusses (130) verbinden kann und ein anderes Batteriezellenüberwachungsmodul den Minuspol (104) der Batteriezelle (100) mittels des zweiten elektrischen Schalters (114) mit der anderen elektrischen Leitung (141) des Balancingbusses (130) verbinden kann, wobei sich dies, je nach Reihenfolge der Zellen, auch in umgekehrter Reihenfolge und Polarität vollziehen kann.

4. Batteriemodul (10) nach einem der Ansprüche 1-3, wobei das Batteriezellenüberwachungsmodul (110) mindestens einen elektrischen Datenanschluss (116) aufweist der kapazitiv mit einer der elektrischen Leitungen (140, 141) des Balancingbuses (130) verbunden ist, wobei Steuersignale durch Modulation auf dieser elektrischen Leitung (140, 141) zu dem Datenanschluss übertragen werden.

5. Batteriemodul (10) nach einem der Ansprüche 1-3, wobei das Batteriezellenüberwachungsmodule (110) mindestens einen optischen Datenanschluss (117) aufweist und wobei der Balancingbuses (130) eine optische Leitung (118) aufweist, wobei der Datenanschluss optisch mit der optischen Leitung des Balancingbuses (130) verbunden ist, wobei Steuersignale durch Modulation von Licht auf der entsprechenden optischen Leitung übertragen werden.

6. Batteriemodul (10) nach einem der Ansprüche 1-3, wobei das Batteriezellenüberwachungsmodule (110) mindestens einen elektrischen Datenanschluss (119) aufweist der zweipolig ausgeführt ist und wobei der Balancingbus (130) zwei elektrische Datenleitungen (120) umfasst, die mit dem zweipoligen elektrischen Datenanschluss verbunden sind, wobei jeweils eine elektrische Datenleitung mit einemelektrischen Datenanschluss verbunden ist, wobei Steuersignale durch Modulation auf den zwei elektrischen Datenleitungen übertragen werden.

7. Batteriemodul (10) nach einem der vorhergehenden Ansprüche, wobei die elektronischen Batteriezellenüberwachungsmodule (110) programmierbar sind und mindestens einen Mikroprozessorbaustein (200) der, Speicher, Ein/Ausgabe Ports, Temperatur und Spannungsmessmittel umfasst, aufweisen, wobei die elektronischen Batteriezellenüberwachungsmodule (110) eine grundlegende Kommunikationsfunktionalität zur Kommunikation mit den anderen Batteriezellenüberwachungsmodulen (110) mittels des Balancingbuses (130) aufweisen.

8. Batteriemodul (10) nach Anspruch 7, wobei die elektronischen Batteriezellenüberwachungsmodule (110) jeweils eine einzigartige Nummer z.B. nachdem UUID-Standard aufweisen, wobei diese Nummer unlöschbar in den Batteriezellenüberwachungsmodulen (110) implementiert ist und über den Balancingbus (130) abgefragt werden kann.

9. Batteriemodul (10) nach Anspruch 7-8, wobei die elektronischen Batteriezellenüberwachungsmodule (110) die Kenndaten der entsprechenden Batteriezelle (100) über die Lebensdauer der Batteriezelle (100) aktualisiert speichern.

10. Batteriemodul (10) nach einem der vorhergehenden Ansprüche, wobei das elektronische Batteriezellenüberwachungsmodul (110) einteilig mit der Batteriezelle (100) ausgebildet ist wodurch ein autonomes Batterieelement (150) gebildet wird.

11. Batteriemodul (10) nach einem der vorhergehenden Ansprüche, wobei die Batteriezelle (100) des Batteriemoduls (10) während des Betriebes als Energieversorgung, als auch in Zeiträumen in denen das Batteriemodul (10) weder mit einer Energieversorgung noch mit einem Verbraucher verbunden ist, balanciert werden.

12. Batteriemodul (10) nach einem der vorhergehenden Ansprüche, wobei das Batteriemodul (10) eine Schnittstelle aufweist, die dazu ausgebildet ist das Batteriemodul (10) mit einer weiteren Batteriemodulen und der Steuerung eines elektrisch angetriebenen Fahrzeugs zu verbinden.

13. Batteriemodul (10) nach dem vorhergehenden Anspruch, wobei die Schnittstelle elektrische Kontakte aufweist, die jeweils mit einer der zwei elektrischen Leitungen (140, 141) des Balancingbusses (130) verbunden und dazu ausgebildet sind elektrische Ströme der Batteriemodule untereinander auszutauschen oder Strom von außen in den Energiespeicher (170) zu leiten und diesen dadurch aufzuladen.

14. Batteriemodul (10) nach einem der Ansprüche 12-13, wobei die Schnittstelle elektrische oder optische Kontakte aufweist, die dazu ausgebildet sind mit der Steuerung anderer Module, der des elektrisch angetriebenen Fahrzeugs oder der eines Lagersystems zu kommunizieren.

15. Verfahren zum Anpassen der Ladung der einzelnen Batteriezellen (100) eines Batteriemoduls (10) auf ein einheitliches vorgegebenes Niveau umfassend die Schritte:
a) Ein Batteriemodul (10) für Hochvolt-Batterie-Packs vorzugsweise für den Einsatz in Fahrzeugen, umfassend eine Mehrzahl von Batteriezellen (100), umfassend jeweils ein an jeder der Batteriezellen (100) angebrachtes elektronisches Batteriezellenüberwachungsmodul (110), wobei die Batteriezellenüberwachungsmodule (110) durch einen, mindestens zwei elektrische Leitungen (140, 141) umfassenden, Balancingbus (130), zur Übertragung von Daten und elektrischem Strom, miteinander verbunden sind, wobei die elektronischen Batteriezellenüberwachungsmodule (110) mit einem Pluspol (102) und einem Minuspol (104) der Batteriezelle (100) elektrisch verbunden sind, wobei die elektronischen Batteriezellenüberwachungsmodule (110) einen ersten elektrische Schalter (112) und einen zweiten elektrischen Schalter (114) aufweisen, wobei die elektrischen Schalter (112, 114) dazu ausgebildet sind die Batteriezellen (100) elektrisch mit jeweils einer der zwei elektrische Leitungen (140, 141) des Balancingbuses (130) zu verbinden, wobei das Batteriemodul (10) ein Energiespeichermodul (170) zur Speicherung elektrischer Energie umfasst, wobei das Energiespeichermodul (170) elektrisch mit den zwei elektrischen Leitungen (140, 141) des Balancingbuses (130) verbunden ist um elektrische Energie darüber aufzunehmen oder abzugeben, wobei die elektronischen Batteriezellenüberwachungsmodule (110) und das Energiespeichermodul (170) durch den Balancingbus (130) miteinander verbunden sind, ein Zell-Balancing-System bilden.;
b) Verbinden des Pluspols (102) der Batteriezelle (100) mit dem Minuspol (104) der benachbarten Batteriezelle (100) und verbinden des Minuspols (104) der Batteriezelle (100) mit dem Pluspol (102) der benachbarten Batteriezelle (100), so das eine Reihenschaltung aller Batteriezellen (100) entsteht, wobei ein Pluspol (102) und ein Minuspol (104) der Reihenschaltung nicht miteinander verbunden sind;
c) Starten der Kommunikation aller angeschlossenen Batteriezellensteuermodul (110) über den Balancingbuses (130);
c) Identifizieren aller Batteriezellenüberwachungsmodule (110) ;
d) Ermitteln der Anordnung der Batteriezellen im Batteriemodul (10);
e) Austauschen aller Ladezustände der Batteriezellen (100) über den Balancingbuses (130);
f) Kontrolle übernehmen durch das Batteriezellenüberwachungsmodul (110) mit der höchsten übermittelten Ladespannung;
g) Aufschalten zweier in Reihe geschalteten Batteriezellen auf den Balancingbus, jeweils durch den Pluspol der einen Zelle und den Minuspol der anderen Zelle, wobei eine der Zellen, die Zelle mit der höchsten Zellspannung ist und die zweite in Reihe liegende Zelle mit der vergleichsweise höheren Zellspannung dieser beiden benachbarten, in Reihe liegenden Zellen ist;
h) Laden des elektrischen Energiespeichers (170);
i) Trennen der Batteriezellen (100) vom Balancingbus (130);
j) Aufschalten des Pluspols (102) und des Minuspols (104) der Batteriezellen (100) mit der niedrigsten Ladespannung auf den Balancingbus (130);
k) Laden der Batteriezelle (100) mit der Energie des elektrischen Energiespeichers (170);
l) Trennen der Batteriezellen (100) vom Balancingbus (130); m)Mit Verfahrensschritt e) fortfahren.
